## Europäisches Patentamt
## European Patent Office
## Office européen des brevets

(11) Veröffentlichungsnummer : **0 068 121**
**B1**

# EUROPÄISCHE PATENTSCHRIFT

(45) Veröffentlichungstag der Patentschrift :
28.08.85

(21) Anmeldenummer : 82104098.7

(22) Anmeldetag : 12.05.82

(51) Int. Cl.⁴ : **B 64 C   3/14**

(54) **Tragflügel für Flugzeuge mit Kurzstart- und Kurzlandeeigenschaften.**

(30) Priorität : 01.07.81 DE 3125916
12.03.82 DE 3208970

(43) Veröffentlichungstag der Anmeldung :
05.01.83 Patentblatt 83/01

(45) Bekanntmachung des Hinweises auf die Patenterteilung : 28.08.85 Patentblatt 85/35

(84) Benannte Vertragsstaaten :
FR GB

(56) Entgegenhaltungen :
FR-A- 2 159 422
FR-A- 2 302 910
FR-A- 2 384 671
FR-A- 2 427 249
US-A- 2 608 364
J.H. Abbott, A.E.v. Doenhoff: "Theory of wing sections" Dover Publications Inc., New York, 1959, Seiten 414, 502, 503

(73) Patentinhaber : DORNIER GMBH
Postfach 1420
D-7990 Friedrichshafen (DE)

(72) Erfinder : Lotz, Michael, Dr.-Ing.

Verstorben (DE)
Erfinder : Proksch, Hans-Jörg, Dipl.-Ing.
Höhenweg 7
D-7759 Hagnau (DE)
Erfinder : Welte, Dieter, Dipl.-Ing.
Drosselweg 31
D-7778 Markdorf (DE)
Erfinder : Zimmer, Herbert, Dipl.-Ing.
Virchowstrasse 21
D-7990 Friedrichshafen 1 (DE)

(74) Vertreter : Landsmann, Ralf, Dipl.-Ing.
Kleeweg 3
D-7990 Friedrichshafen 1 (DE)

**Beschreibung**

Die Erfindung betrifft einen Tragflügel für Flugzeuge mit Kurzstart- bzw. Kurzlandeeigenschaften, vorgesehen für Reisefluggeschwindigkeiten bis etwa 700 km/h.

Bei Flugzeugen der genannten Art ist es im Hinblick auf die gegenwärtige und im Hinblick auf die zukünftig zu erwartende Energiesituation in erhöhtem Masse erforderlich, nach Möglichkeiten zur Verbesserung der Wirtschaftlichkeit bei hohen Leistungsforderungen zu suchen. Zur Erfüllung hoher Leistungsforderungen kommt der Ausbildung der Profilform der Flugzeugtragflügel wesentliche Bedeutung zu.

In der Vergangenheit war es üblich, Profile für Flugzeugtragflügel der allgemeinen Luftfahrt Profilkatalogen zu entnehmen. Solche Kataloge enthalten Zusammenstellungen von Profilreihen, so z. B. die, welche von der NACA aufgestellt worden sind. Für die Zusammenstellung einer Profilreihe wurde eine bestimmte Bezeichnungsweise festgelegt, aus der bestimmte Unterscheidungsmerkmale entnommen werden können.

So enthält die Zusammenstellung einer Profilreihe nach einer Bezeichnung z. B. Angaben über die Profilwölbung in Prozent, der Wölbungsrücklage in Zehnteln der Profiltiefe und der Profildicke in Prozent der Profiltiefe.

Bei einer anderen Profilreihe sind zu den festgelegten Maßen für die Wölbung der Profile, der doppelte Wert der Wölbungsrücklage in Zehnteln der Profiltiefe, die Form der Skelettlinie und Werte für die Ausbildung der Profile, bezüglich der Profildicke in Prozent der Profiltiefe festgelegt.

In neuerer Zeit herrscht zunehmend — auch bei neueren NACA-Entwicklungen — die Tendenz vor, nach rein aerodynamischen Gesichtspunkten von vorgegebenen Druck- bzw. Geschwindigkeitsverteilungen auf der Saug- und Druckseite der Profile auszugehen. Ziel der angegebenen Entwicklungen ist es, Profilausbildungen zu ermitteln, die bestimmte Aufgaben optimal lösen.

Einer solchen neueren Entwicklung (siehe Oberbegriff des Anspruchs 1) entspricht das Profil NACA 23 018, beschrieben bei J. H. Abbott, A.E.v. Doenhoff : « Theory of wing sections » Dover Publications Inc., New York, 1959, Seiten 414, 502 und 503.

Zur Vermeidung höheren Gewichtes und Verminderung des Widerstandes sind Klappenanordnungen mit nur einem Spalt zu bevorzugen.

Der Maximalauftrieb bestehender Profilreihen entnommener Laminarprofile ist aufgrund des für die Laminarhaltung der Strömung relativ gering zu bemessenden Nasenradius relativ niedrig. Demgegenüber ist der Mindestwiderstand der genannten Laminarprofile unter Ausnutzung der Laminardelle sehr gering.

Die vorliegende Erfindung geht nicht von Laminarprofilen aus, und zwar aus Gründen, die sich aus der Fertigungstechnik hinsichtlich nicht vermeidbarer Unstetigkeiten der Profilober- bzw. der Profilunterseite an bestimmten Stellen über die Profiltiefe, z. B. im Bereich des Anschlusses des Nasenkastens am Vorderholm (z. B. bei einer Ausführung im Bereich von 17 % der Profiltiefe) ergeben und der Tatsache, dass zumindest ein Abschnitt der freien Tragflügeloberseite durch Propeller- bzw. Treibgasstrahlen der Triebwerke umströmt wird.

Ausgehend von den genannten Fakten, wurde zur Schaffung gegenüber bekannten, aus Profilkatalogen entnommenen Profilen (z. B. NACA-Profilen), verbesserter Profile, in bezug auf den Maximalauftrieb und den sich aus dem Verhältnis von Widerstandskraft zur Auftriebskraft ergebenden Gleitwinkel, eine stärkere Wölbung der Profilnase und eine stärkere Wölbung des Profils im rückwärtigen Abschnitt der Profiloberseite vorgesehen.

Derartige bekannte Ausbildungen weisen gewisse Ähnlichkeiten mit bekannten Tragflügelprofilen für superkritische Strömungsverhältnisse auf. Jedoch ergibt sich bei diesen bekannten Profilausbildungen infolge der starken, rückwärtigen Belastungen des Profils ein Nickmoment mit gegenüber herkömmlichen Profilen starker Kopflastigkeit. Die dabei dickere Profilnase führt zu einem Abbau der Spitzen der Saugwirkung im Bereich der Profilnase und der rückwärtig gebildete Abschnitt mit seiner gegenüber herkömmlichen Profilen stärkeren Wölbung zu der genannten erhöhten Belastung im hinteren Profilabschnitt.

Ein solches kopflastiges Nickmoment ergibt für Flugzeuge der eingangs erwähnten Kategorie in ungünstiger Weise einen Trimmwiderstand von mehreren Prozent des Reiseflugwiderstandes.

Aufgabe der vorliegenden Erfindung ist es, Profile für die Tragflügel von Flugzeugen der angegebenen Kategorie zu schaffen, die einerseits einen gegenüber bisher üblichen Werten grösseren Maximalauftrieb liefern und die andererseits eine Verringerung des kopflastigen Nickmoments ermöglichen. Ferner ist es Aufgabe der Erfindung, bei der Verwendung von Hochauftriebsklappen einen günstigen Übergang von der Kontur des Profils der Tragflügel auf die Kontur der Klappen sowohl in eingefahrenem als auch in ausgefahrenem Zustand zur Erzielung optimaler Strömungsverhältnisse herzustellen.

Die gestellte Aufgabe ist erfindungsgemäss dadurch gelöst, dass der Verlauf der Skelettlinie (S) des Tragflügelprofils über die Profillänge (l) einen vorderen Punkt ($b_1$) bei ca. x/l = 0,15 mit einem ersten Wölbungsmaximum von ca. 1,54 % der Länge (l), einen hinteren Punkt ($b_2$) bei ca. x/l = 0,7 mit einem zweiten Wölbungsmaximum von ca. 1,94 % der Länge (l), einen zwischen dem vorderen und dem hinteren Punkt ($b_1$ bzw. $b_2$) liegenden Punkt ($b_3$) bei ca. x/l = 0,4 eines Wölbungsminimums von ca. 1,4 % der Länge (l) einschliesst und dass der Skelettlinie (S) ein Profiltropfen überlagert ist mit einer Dickenverteilung (D), die charakterisiert ist durch einen vorderen Punkt bei ca. x/l = 0,15 von ca. $Y_D/l$ = 0,059, einen Punkt bei ca. x/l = 0,42 von $Y_D/l$ = 0,08, einen Punkt bei ca. x/l = 0,7 von ca. $Y_D/l$ = 0,052 und einen hinteren Punkt bei ca. x/l = 1,0 von ca. $Y_D/l$ = 0,003 5 und dass ferner das Profil mit einem Nasenradius (r) von ca. r/l = 0,014 5 ausgeführt ist.

So ausgebildete Tragflügelprofile weisen gegenüber bekannten Tragflügelprofilierungen vergleichbarer Flugzeuge einen wesentlichen höheren Maximalauftrieb, sowohl mit als auch ohne die Wirkung von Hochauftriebsmitteln, wie Einfachspaltklappen auf, wodurch die Landeeigenschaften in bezug auf eine möglichst kurze Landestrecke verbessert werden konnten.

Ferner wurde mit der Profilausbildung eine Verringerung der Grösse des Nickmomentes erzielt, wodurch der Trimmwiderstand reduziert und damit eine wesentliche Kraftstoffersparnis erreicht wird. Zudem bewirkt die erfindungsgemässe Ausbildung des Profils eine Verbesserung der Gleitzahl für den Steigflug.

Beispielsweise ergibt sich aus der Profilausbildung für ein zweimotoriges Reiseflugzeug mit einer Abflugmasse von 1 814 kg, einer Flächenbelastung von 927,4 N/m² und einer Motorleistung von 2 × 147 KW eine Erhöhung des Maximalauftriebes um 20 % und der Gleitzahl im Steigflug um 4 % bei einer Verkürzung der Startrollstrecke um 25 % und einer Vergrösserung des Steiggradienten bei Triebwerksausfall um 32 %.

In weiterer Ausgestaltung der Erfindung ist vorgesehen, dass dem Tragflügel eine Hochauftriebsklappe in der Art einer Einfachspaltklappe zugeordnet ist und dass die Klappe eine Tiefe von etwa 30 % der Tiefe des Tragflügelprofils aufweist und eine maximale Rücklage des Klappendaches im Grössenbereich von 90 % vorgesehen ist.

Durch die erfindungsgemäss angeordnete Spaltklappe ist bei Ausschlag in die Landestellung ein hoher Maximalauftrieb, z. B. bei einer Ausführung $c_{a_{max}}$ = 3,4 und für den Steigflug (Start) eine relativ hohe Gleitzahl in einem Grössenbereich von 1,8 ≤ $c_a$ ≤ 2,2 erzielt. Infolge der Klappenprofilierung, entsprechend dem Tragflügelprofil mit einem relativ kleinen Nasenradius mit relativ starker Wölbung im Nasenbereich und einer starken rückwärtigen Wölbung, wird eine Druckverteilung ähnlich der am Tragflügel mit den dort genannten vorteilhaften Wirkungen erzielt.

Die Wölbung von Klappendach und Spaltklappe führt zu einer starken Druckabsenkung im Bereich des Klappendaches und zu einer fülligen Belastung der Klappe insgesamt. Aus der Klappenprofilierung ergibt sich bei relativ kleinem Klappenausschlag ein relativ hoher Maximalauftrieb. Daraus resultiert eine ausserordentlich hohe Gleitzahl.

Ein Ausführungsbeispiel der erfindungsgemässen Profilierung ist in der Zeichnung dargestellt und wird nachfolgend im einzelnen beschrieben.

Es zeigen :

Figur 1 schematisiert die Profilierung eines Tragflügels in zweidimensionaler Darstellung in x- und y-Richtung,

Figur 2 in einem Diagramm den Wölbungsverlauf der Profil-Skelettlinie und den Dickenverlauf des der Skelettlinie überlagerten Profiltropfens, wobei für den Dickenverlauf ein anderer Maßstab gewählt ist,

Figur 3 in einem Diagramm den Kennlinienverlauf der Druckverteilung am Tragflügelprofil im Vergleich mit einem herkömmlichen Tragflügelprofil,

Figur 4 schematisiert das Tragflügelprofil in Verbindung mit dem Spaltklappenprofil,

Figur 5 in einem Diagramm den Kennlinienverlauf der Druckverteilung am Tragflügel bei ausgefahrener Spaltklappe,

Figur 6a in einem Diagramm die Kennlinie des Auftriebes über dem Widerstand im Vergleich zu einem herkömmlichen Tragflügelprofil,

Figur 6b in einem Diagramm die Kennlinie des Auftriebes über dem Anstellwinkel im Vergleich zu einem herkömmlichen Profil und

Figur 7 in einem Diagramm die Kennlinie des Nickmomentes.

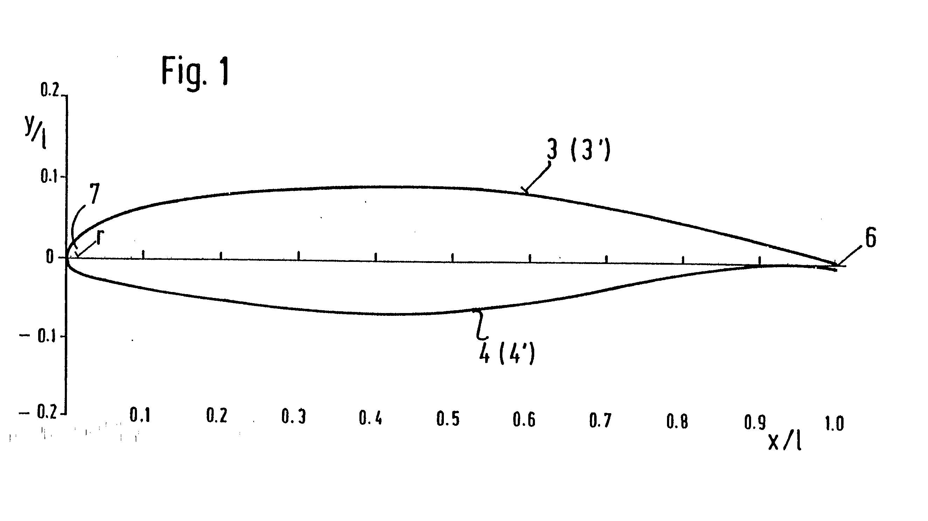

In Fig. 1 ist als Ausführungsbeispiel ein Tragflügelprofil in einem Koordinatensystem dargestellt, wobei auf der Abszisse x die relative Profiltiefe x/l mit der Profilsehnenlänge l und auf der Ordinate y die relative Profildicke y/l in einer Einteilung in Zehnteln der Profiltiefe bzw. der Profildicke aufgetragen ist.

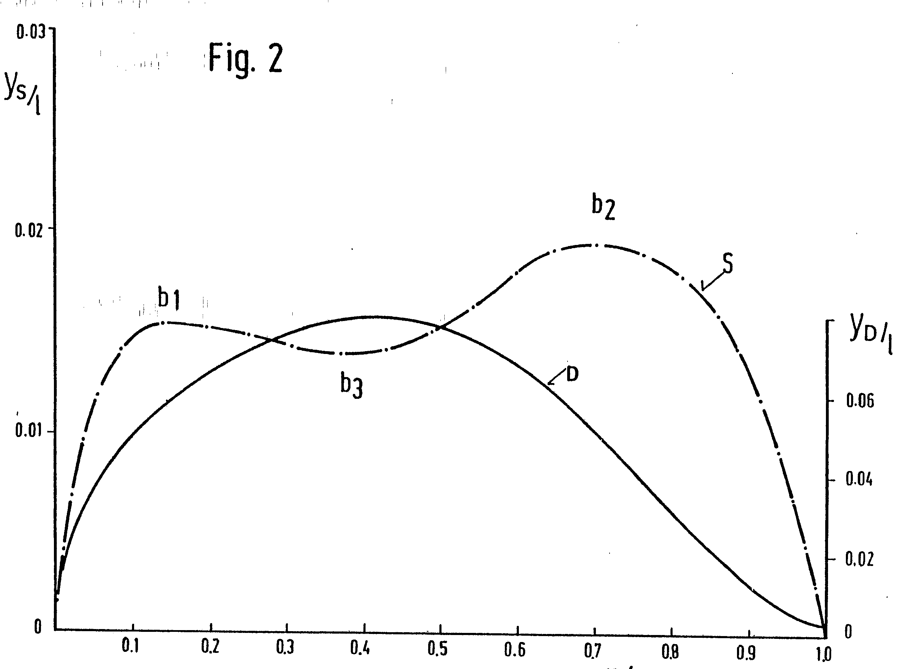

Die Kontur des Profils gemäss Fig. 1 ist bestimmt durch die symmetrische Dickenverteilung nach dem vorgegebenen Profiltropfen gemäss Fig. 2, der in bekannter Weise der gewölbten Skelettlinie S gemäss Fig. 2 mit ihren beiden Wölbungsmaxima $b_1$ bzw. $b_2$ und dem zwischen diesen liegenden Wölbungsminimum $b_3$ überlagert ist.

Der Wölbungsverlauf der Kennlinie der Skelettlinie S nach Fig. 2 weist einen hinteren Abschnitt x/l von 0,7 mit dem zweiten Wölbungsmaximum $b_2$ mit starkem Abfall gegen die Profilhinterkante 6 auf, welcher in Verbindung mit der relativ dicken Hinterkante von $Y_D/l$ = 0,003 5 nach Fig. 2 zur Erzielung des allgemein als « rear loading » bezeichneten Effektes des Druckverlaufes an der Profiloberseite 3 und Profilunterseite 4 führt.

Der mittlere Abschnitt x/l ab der Teilung 0,3 bis 0,7 der Kennlinie mit Wölbungsabnahme und Einschluss des Wölbungsminimums $b_3$ führt in Verbindung mit der Dickenverteilung D nach Fig. 2 zu einer flach verlaufenden Profiloberseite 3 mit Vermeidung einer vorzeitigen Ablösung der Grenzschicht und einem weit nach hinten in Richtung auf die Profilhinterkante 6 verlagerten, wirksamen Unterdruckbereich an der Profiloberseite 3.

Der vordere Abschnitt x/l von O ausgehend bis ca. 0,25 der Einteilung ergibt sich aus dem relativ kleinen Nasenradius r und relativ grosser Wölbung sowie der nach unten gezogenen Profilnase 7 zur Erzielung des allgemein als « front loading » bezeichneten Effektes des Druckverlaufes an der Profiloberseite 3 und Profilunterseite 4. Daraus resultieren die geforderten günstigen Trimmwiderstände im Reiseflug mit teilweiser Kompensation des unerwünschten Nickmomenteneffektes infolge « rear loading » im hinteren Bereich des Profils.

Die Profilkontur wird, wie in Fig. 2 dargestellt, beschrieben durch den gewölbten Verlauf der Skelettlinie S und durch eine symmetrische Dickerverteilung D, die der Skelettlinie S überlagert ist. Dafür ist gegenüber der Bestimmung der Skelettlinie eine Ordinate y mit anderem Maßstab eingetragen.

Charakterisiert ist die gewählte Dickenverteilung D durch einen vorderen Punkt bei ca. $x/l = 0,15$ mit ca. $Y_D/l = 0,059$, einem Punkt bei ca. $x/l = 0,42$ mit ca. $Y_D/l = 0,08$ und einem hinteren Punkt bei ca. $x/l = 1$ mit ca. $Y_D/l = 0,003\,5$. Dabei ist für die Auslegung der Profilnase ein Nasenradius mit $r/l = 0,014\,5$ bestimmt.

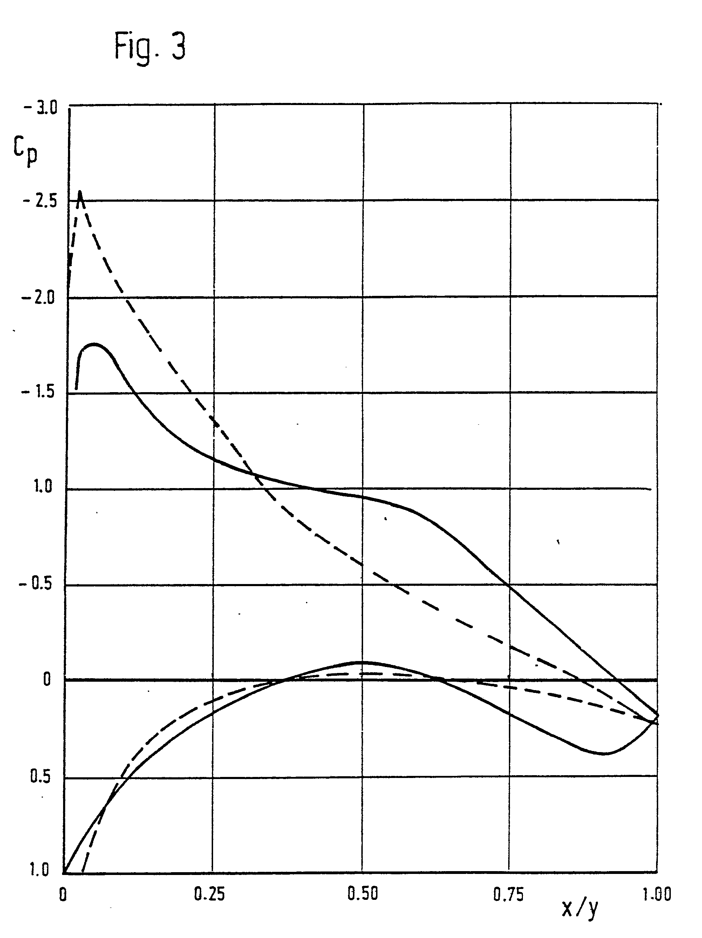

Im Diagramm nach Fig. 3 ist im Zusammenhang mit der Ausbildung des Profils 1 gemäss Fig. 1 und 2, der Kennlinienverlauf der Druckverteilung im Vergleich mit einer herkömmlichen Profilausbildung gezeigt. Daraus ist die durch die Ausführung nach Fig. 1 bis 3 erzielbare günstige Druckverteilung mit Abbau der Saugspitze und den daraus resultierenden guten Langsamflugeigenschaften ohne die Gefahr einer Ablösung der Grenzschicht bei höheren Anstellwinkeln zu erkennen. Dabei entspricht die gestrichelte Kennlinie der herkömmlichen Ausbildung.

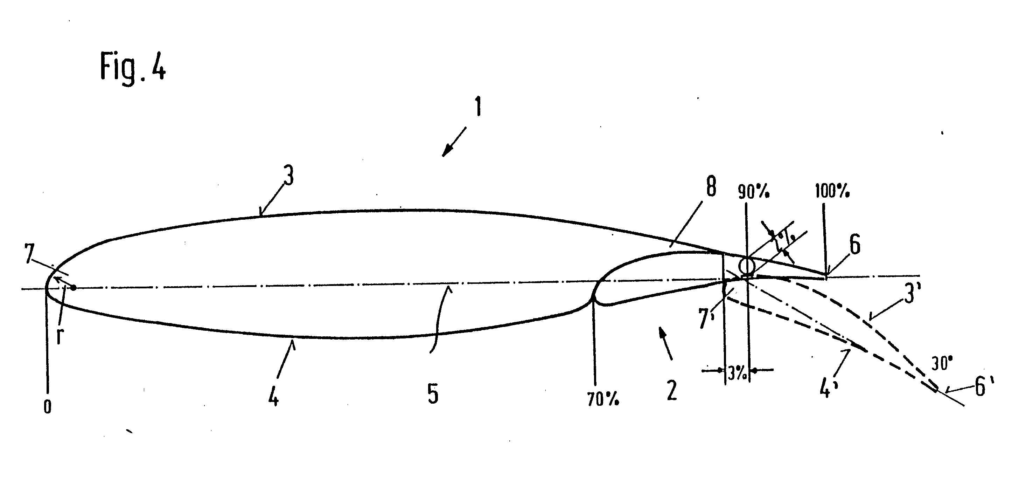

Erreicht wird dieser Effekt durch den relativ kleinen Nasenradius und den Anstieg der Wölbung der Skelettlinie S zum ersten Wölbungsmaximum $b_1$. Ferner lässt sich dem Diagramm der erzielte « front loading ». Effekt in Verbindung mit dem erzielbaren « rear loading »-Effekt entnehmen, wobei ein günstiger Übergang zur Oberseite einer Hochauftriebsklappe erreicht ist, wie Fig. 4 erkennen lässt. Ausserdem zeigt dabei die Druckkurve $c_p$ im Bereich $x/l$ zwischen 0,25 und ca. 0,6 einen nahezu ebenen Verlauf, entsprechend dem Minimum $b_3$ der Kennlinie der Skelettlinie S.

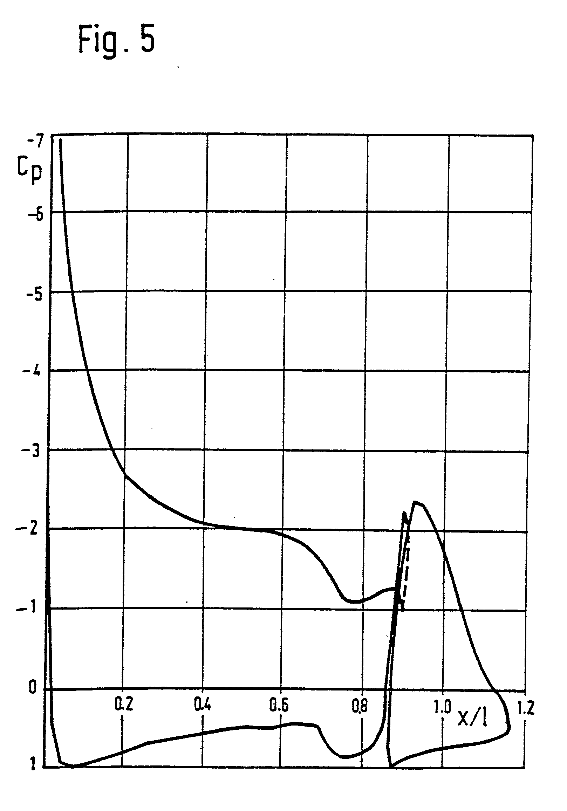

In Fig. 4 ist die Ausführung des Profils 1 in Verbindung mit einer Einfachspaltklappe 2 dargestellt. Das Diagramm des Kennlinienverlaufes der Druckverteilung gemäss Fig. 5 am Profil der Spaltklappe 2 zeigt für die Spaltklappe 2 einen dem Druckverlauf am Profil 1 ähnlichen Druckverlauf mit den daraus resultierenden, bereits genannten vorteilhaften Wirkungen. Mit 3' bzw. 4' ist dabei die Klappenober-, bzw. die Klappenunterseite, mit 7' die Klappennase und mit 5 die strichpunktiert eingezeichnete Profilsehne bezeichnet.

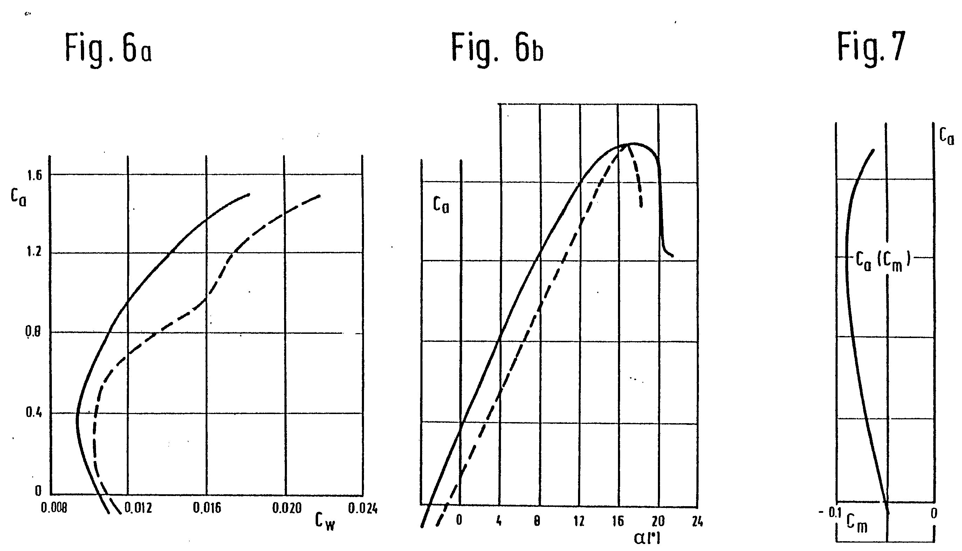

In Fig. 6a sind in graphischer Darstellung die verbesserten Polaren der Ausführung des Tragflügelsprofils bzw. Auftriebs- und Widerstandsbeiwerte $c_a$ bzw. $c_w$ des Profils dargestellt, im Vergleich zu einem entsprechenden, in üblicherweise ausgebildeten Profil, hier dem NACA-Profil 23 018 (gestrichelt dargestellt).

Fig. 6b zeigt den Verlauf des Auftriebsbeiwertes $c_a$ über dem Anstellwinkel $\alpha$ des Ausführungsbeispiels, ebenfalls im Vergleich zu den Werten des bekannten Profils (NACA 23 018). Zu erkennen ist hier der gleichbleibende Wert des Maximalauftriebes $c_{a_{max}}$ über einen grossen Bereich der Änderung des Anstellwinkels $\alpha$ mit der daraus resultierenden Unempfindlichkeit der Profilausbildung im Langsamflug entsprechend der gestellten Aufgabe.

Schliesslich zeigt die Fig. 7 den Kennlinienverlauf des Nickmomentes $c_m$ mit über den gesamten Bereich des Auftriebes geringem Wert mit den daraus resultierenden guten Trimmeigenschaften und der davon abhängigen Reduzierung des Widerstands für den Reiseflug des Flugzeuges.

Es wurde gefunden, dass das Zusammenwirken der voneinander abhängigen Merkmale des erfindungsgemässen Profils zur Erfüllung der gestellten Forderungen gemäss der Aufgabe zu einer wesentlichen Verbesserung des Maximalauftriebes, des Gleitwinkels und der Trimmung mit der daraus resultierenden Verminderung des Widerstandes im Reiseflug und damit zu einer wesentlichen Kraftstoffeinsparung führt.

**Patentansprüche**

1. Tragflügel für Flugzeuge mit Kurzstart- bzw. Kurzlandeeigenschaften, vorgesehen für Reisefluggeschwindigkeiten bis etwa 700 km/h, dadurch gekennzeichnet, daß der Verlauf der Skelettlinie (S) des Tragflügelprofils über die Profillänge (l) einen vorderen Punkt ($b_1$) bei ca. $x/l = 0,15$ mit einem ersten Wölbungsmaximum von ca. 1,54 % der Länge (l), einen hinteren Punkt ($b_2$) bei ca. $x/l = 0,7$ mit einem zweiten Wölbungsmaximum von ca. 1,94 % der Länge (l), einen zwischen dem vorderen und dem hinteren Punkt ($b_1$ bzw. $b_2$) liegenden Punkt ($b_3$) bei ca. $x/l = 0,4$ eines Wölbungsminimums von ca. 1,4 % der Länge (l) einschließt und daß der Skelettlinie (S) ein Profiltropfen überlagert ist mit einer Dickenverteilung (D), die charakterisiert ist durch einen vorderen Punkt bei ca. $x/l = 0,15$ von ca. $Y_D/l = 0,059$, einen Punkt bei ca. $x/l = 0,42$ von $Y_D/l = 0,08$, einen Punkt bei ca. $x/l = 0,7$ von ca. $Y_D/l = 0,052$ und einen hinteren Punkt bei ca. $x/l = 1,0$ von ca. $Y_D/l = 0,003\,5$ und daß ferner das Profil mit einem Nasenradius (r) von ca. $r/l = 0,014\,5$ ausgeführt ist.

2. Tragflügel nach Anspruch 1, dadurch gekennzeichnet, dass dem Tragflügel (1) eine Hochauftriebsklappe (2) in der Art einer Einfachspaltklappe zugeordnet ist und dass die Klappe eine Tiefe von 30 % der Tiefe des Tragflügelprofils (1) aufweist und eine maximale Rücklage des Klappendaches (8) im Grössenbereich von 90 % vorgesehen ist.

**Claims**

1. An airfoil for airplains with short take-off and landing capability, and cruis speeds up to about 700 km/h having a center line (S) which includes a first forward point ($b_1$) at about $x/l = 0,15$ with a first camber maximum of about 1,54 % of the length (l), a rear point ($b_2$) at about $x/l = 0,7$ with a second camber maximum which is about 1,94 % of the length (l), a point ($b_3$) located between the forward and the rear point ($b_1$ and $b_2$) and at about $x/l = 0,4$ representing a camber minimum of about 1,4 % of the length (l), and where a profil droplet is superposed an the center line (S) and even thickness distribution (D), having a forwad point of about $Y_D/l = 0,059$ at about $x/l = 0,42$ by a point $Y_D/l = 0,08$, a point at about $x/l = 0,7$ of about $Y_D/l = 0,052$ and by a rear point of about $Y_D/l = 0,003\ 5$ and said profile also having a nose radius (r) of about $r/l = 0,014\ 5$.

2. A profile according to claim 1 including a high-lift flap (2) of the single-slot flap type mounted on the wing, said flap having depth of about 30 % of the depth of the wing (1), and a maximum rearward offset of the flap roof (8) of the order of about 90 %.

### Revendications

1. Aile portante pour avions à propriétés de décollage court et d'atterrissage court, prévu pour des vitesses en vol de croisière allant jusqu'à environ 700 km/h, caractérisée en ce que l'allure de la ligne squelette S du profil de l'aile portante, sur la longueur du profil (l), comprend un point avant ($b_1$) à environ $x/l = 0,15$ avec un premier maximum de courbure qui est d'environ 1,54 % de la longueur (l), un point arrière ($b_2$) à environ $x/l = 0,7$ avec un second maximum de courbure d'environ 1,94 % de la longueur (l), un point ($b_3$) situé entre le point avant et le point arrière ($b_1$ ou $b_2$) à environ $x/l = 0,4$ avec un minimum de courbure d'environ 1,4 % de la longueur (l), et en ce qu'un profil aérodynamique en forme de goutte est superposé à la ligne squelette (S), avec une répartition de l'épaisseur (D) qui est caractérisée par un point avant à environ $x/l = 0,15$ qui est d'environ $Y_D/l = 0,059$, par un point à environ $x/l = 0,42$ qui est de $Y_D/l = 0,08$, par un point à environ $x/l = 0,07$ qui est d'environ $Y_D/l = 0,052$ et par un point arrière à environ $x/l = 1,0$ qui est d'environ $Y_D/l = 0,003\ 5$, et en ce qu'en outre le profil est constitué avec un rayon du nez (r) d'environ $r/l = 0,014\ 5$.

2. Aile portante selon la revendication 1, caractérisée en ce qu'un volet hypersustentateur (2) se présentant sous la forme d'un volet à simple fente est associé à l'aile portante (l) et en ce que le volet a une profondeur représentant environ 30 % de la profondeur du profil de l'aile portante (l), et en ce qu'il est prévu une position arrière maximale du toit (8) du volet d'un ordre de grandeur de 90 %.

Fig. 1

Fig. 2

# Fig. 3

Fig. 4

# Fig. 5

# Fig. 6a

# Fig. 6b

# Fig. 7

0 068 121